(19) **Europäisches Patentamt**

**European Patent Office**

**Office européen des brevets**

(11) **EP 0 932 311 B1**

(12) **EUROPEAN PATENT SPECIFICATION**

(45) Date of publication and mention
of the grant of the patent:
**26.04.2006 Bulletin 2006/17**

(51) Int Cl.:
**H04N 11/18** *(2006.01)*

(21) Application number: **99300398.7**

(22) Date of filing: **20.01.1999**

(54) **SECAM system chrominance signal demodulator**

Demodulationseinrichtung für SECAM-Chrominanzsignal

Circuit de démodulation pour signal de chrominance du système SECAM

(84) Designated Contracting States:
**DE FR GB**

(30) Priority: **20.01.1998 JP 900198**

(43) Date of publication of application:
**28.07.1999 Bulletin 1999/30**

(73) Proprietor: **KABUSHIKI KAISHA TOSHIBA**
**Kawasaki-shi,**
**Kanagawa-ken 210-8572 (JP)**

(72) Inventor: **Murayama, Akihiro**
**1-1-1, Shibaura, Minato-ku**
**Tokyo (JP)**

(74) Representative: **Litchfield, Laura Marie et al**
**Haseltine Lake & Co.**
**Imperial House**
**15-19 Kingsway**
**London WC2B 6UD (GB)**

(56) References cited:
**EP-A- 0 510 767**

• **PATENT ABSTRACTS OF JAPAN vol. 1997, no. 07, 31 July 1997 (1997-07-31) & JP 09 065356 A (SANYO ELECTRIC CO LTD), 7 March 1997 (1997-03-07)**

**Description**

The present invention relates to a SECAM system chrominance signal demodulator which is suitable for SECAM system color television receivers.

An example of such a SECAM system chrominance signal demodulator used in the SECAM system color television receivers is disclosed in the Japanese Patent Disclosure JP-A-5-130633 (also published under EP-A-0 510 767) entitled "Chrominance Signal Demodulator Arrangement".

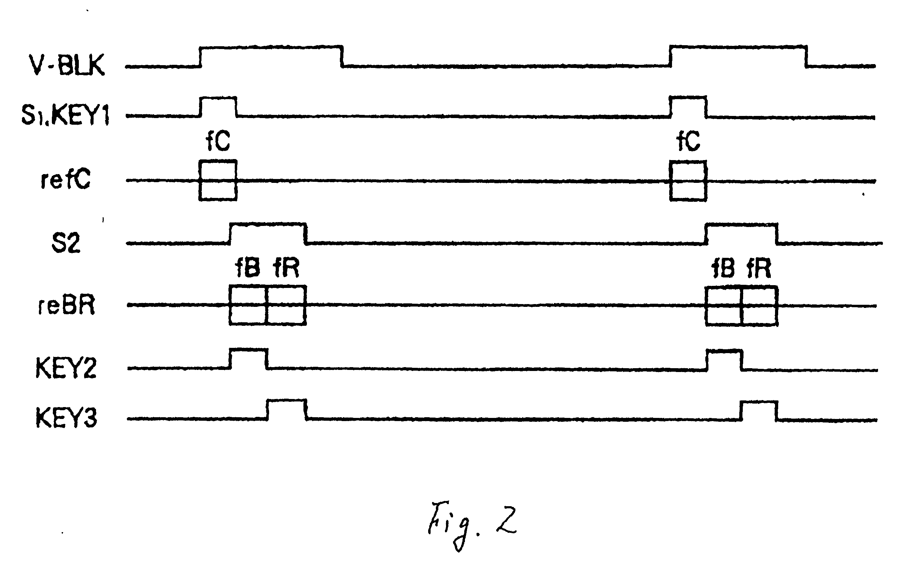

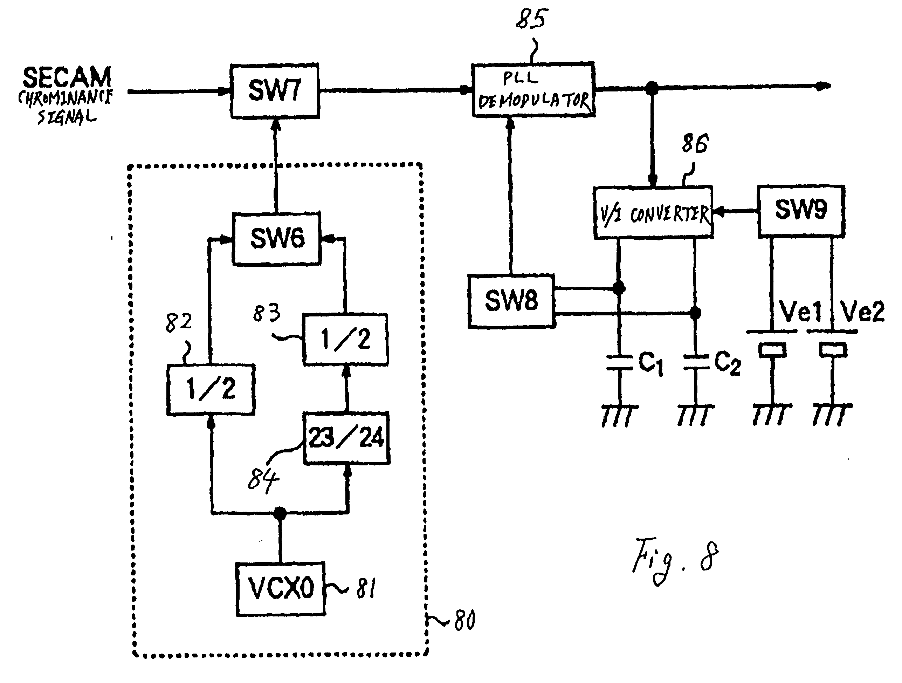

FIGURE 8 shows a schematic block diagram of a system equivalent to the chrominance signal demodulator disclosed in FIGURE 2 of the Japanese Patent Disclosure.

In FIGURE 8, a reference frequency generator 80 includes a clock oscillator 81, two 1/2 frequency dividers 81 and 82, a 23/34 frequency divider 84 and a switch SW6. The clock oscillator 81 oscillates at a frequency twice times the subcarrier frequency Fsc used in the PAL system color television system. The clock frequency is applied to the 1/2 frequency divider 82 and the 23/34 frequency divider 84. The switch SW6 is provided for selecting any one of the signals passing through the 1/2 frequency divider 81 and the 23/34 frequency divider 84. Here the signal passing through the 23/34 frequency divider 84 is further divided by the other 1/2 frequeny divider 83 before the switch SW6. Thus two kinds of reference frequencies are selectively provided from the reference frequency generator 80. Then any one of the reference frequency signals selected by the switch SW6 is applied to a switch SW7.

The switch SW7 selects any one of a SECAM system chrominance signal and the selected reference frequency signal from the switch SW6. The signal selected in the switch SW7 is then applied to a PLL demodulator 85. The PLL demodulator 85 comprises an adjuster for automatically adjusting a black level of its output signal, in cooperation with a circuit block comprising a V/I converter 86, two switches SW8 and SW9, two capacitors C1 and C2 and two reference voltage sources Ve1 and Ve2. In the automatic adjuster, the PLL demodulator 85 demodulates the reference frequency signal passing through the switch SW7. The demodulated signal is then converted to a current mode signal in the V/I converter 86. The current mode signals are charged in the capacitors C1 and C2. The switch SW8 selectively feeds back any one of the charges in the capacitors C1 and C2 to the PLL demodulator 82. Thus the output voltage, i.e., the black level of the PLL demodulator 85 is finally automatically-adjusted to a predetermined level.

In the SECAM color television system, B-Y and R-Y chrominance signals are transmitted by separately FM-modulating them with the 4.25MHz and the 4.40625MHz subcarriers, respectively. In the conventional system as shown in FIGURE 8, the black levels in the PLL demodulation of the B-Y and the R-Y chrominance signals are independently adjusted as described below. The switch SW6 selects any one of the two reference frequency signals. One has the frequency of 4.2489MHz, resulted by dividing in the 23/24 and 1/2 frequency dividers 84 and 83 the PAL system subcarrier Fsc. The other has the frequency of 4.433619MHz, resulted by dividing in the 1/2 frequency divider 82 the PAL system subcarrier Fsc. The 4.2489MHz reference signal is assigned to a subcarrier for the B-Y chrominance signal, while the 4.43MHz reference signal is assigned to another subcarrier for the R-Y chrominance signal. Adjustment voltages in the automatic adjustments using, respectively, the 4.2489 MHz subcarrier and the 4.44MHz subcarrier are stored in the capacitors C1 and C2.

The reference voltages Ve1 and Ve2 are offset each other in accordance with errors of the reference frequencies from their corresponding subcarriers, so that their converged voltages resulted by the automatic adjustments fall into the correct frequencies of the subcarriers. The switch SW9 selectively supplies any one of the reference voltages Ve1 and Ve2 to the V/I converter 86.

According to the conventional circuit arrangement, the adjustment of the black levels are independently carried out for demodulation axes of the respective SECAM system chrominance signal demodulations.

However, although the conventional SECAM system chrominance signal demodulator as described above carries out the black level adjustment of the PLL demodulator, a bell filter (not shown) essentially equipped in the SECAM system chrominance signal demodulation has not been adjusted. This is because that the conventional SECAM system chrominance signal demodulator is configured to generate two different reference frequencies by two independent frequency dividers, while the bell filter has a center frequency of 4.286MHz which is completely different from the reference frequencies 4.26MHz and 4.40625MHz. Thus there is a drawback that the bell filter cannot be adjusted.

Further, since an adjustment accuracy of the output voltage of the PLL demodulator is generally required the order of 1 to 2 mV, which corresponds to the order of 1 to 2 KHz in terms of frequencies, the black level of the R-Y chrominance signal cannot be sufficiently adjusted. This is because that although the frequency of 4.433619 MHz is assigned for the reference frequency for adjusting the R-Y chrominance signal, it is deviated by as much of 33 KHz from the 4.2489 MHz frequency assigned for reference frequency for the B-Y chrominance. The deviation would be compensated with the fixed reference voltage. If the PLL demodulator has a 10 % of dispersion in their modulation sensitivity, which corresponds to the 3 KHz of dispersion, there occurs at least 5 mV of adjustment errors.

Furthermore, when the automatic adjustment is carried out in the vertical retrace interval, the capacitors C1 and C2 must be of very large capacitances for charging the currents for the long terms over the vertical retrace interval. In that case the capacitors must be installed outside ICs. Then, there arise problems of increasing the number of IC pins and external components, and also incurs a serious cost-up problem.

The conventional SECAM system chrominance signal demodulator as described above had incurred a relatively large adjustment error, due to that not only it can not adjust bell filters required for demodulating the SECAM system chrominance signal, but also it has a poor adjustment sensitivity in its PLL demodulator.

It is, therefore, an object of the present invention is to provide a SECAM system chrominance signal demodulator which is possible to automatically adjust bell filters etc., and to enhance the adjustment accuracy.

In order to achieve the above object, a SECAM system chrominance signal demodulator according to the present invention is defined in Claim 1. The demodulator is provided with a reference oscillator for generating a clock signal, a control signal generator for generating a plurality of control signals in a time-sharing manner, by receiving a synchronizing signal of video signal, a reference frequency generator for generating different reference frequency signals in time-sharing manner, which is comprised of a DDS circuit for accumulating clock signals generated in the reference oscillator, of which the overflow cycle of the accumulation is changeable under the control of the control signal applied thereto in the time-sharing manner and a D/A converter for converting the accumulated data from the DDS circuit into an analog reference frequency signal, an adjusting-subject comprising an adjustable bell filter for inversely bell-filtering the SECAM system chrominance signal and an adjustable chrominance demodulator for demodulating a chrominance signal from an output of the bell filter, and comprising a frequency adjuster for adjusting the frequency of the bell filter and for adjusting the chrominance demodulator by applying the output signal from the D/A converter to the adjusting-subject.

Additional objects and advantages of the present invention will be apparent to persons skilled in the art from a study of the following description and the accompanying drawings, which are hereby incorporated in and constitute a part of this specification.

According to the configuration as described above, the aspect of the SECAM system chrominance signal demodulator according to the present invention can generate an arbitrary number of frequency signals in the time-sharing manner, and the frequencies are changed by controlling the bit length of accumulation data. Accordingly, it is able to not only carry out the chrominance demodulation and the bell filter adjustment, but also generates an arbitrary number of frequencies for using a variety of automatic adjustments in the time-sharing manner. Since an accuracy of frequency depends to the bit length of the accumulation, if the bit length is properly selected to obtain a desired accuracy the frequency to be adjusted can be directly obtained.

For a better understandings of the present invention and many of the attendant advantages thereof, reference will now be made by way of example to the accompanying drawings, wherein:

FIGURE 1 is a block diagram showing a first embodiment of the present invention;
FIGURE 2 is a timing chart for explaining the operation of the first embodiment as shown in FIGURE 1;
FIGURE 3 is a block diagram showing a second embodiment of the present invention;
FIGURE 4 is a timing chart for explaining the operation of the second embodiment as shown in FIGURE 3;
FIGURE 5 is another timing chart for explaining the operation of the second embodiment as shown in FIGURE 3 in contrast with the operation of the first embodiment;
FIGURE 6 is a block diagram showing a third embodiment of the present invention;
FIGURE 7 is a timing chart for explaining the operation of the third embodiment as shown in FIGURE 6; and
FIGURE 8 is a schematic block diagram showing a conventional SECAM system chrominance signal demodulator.

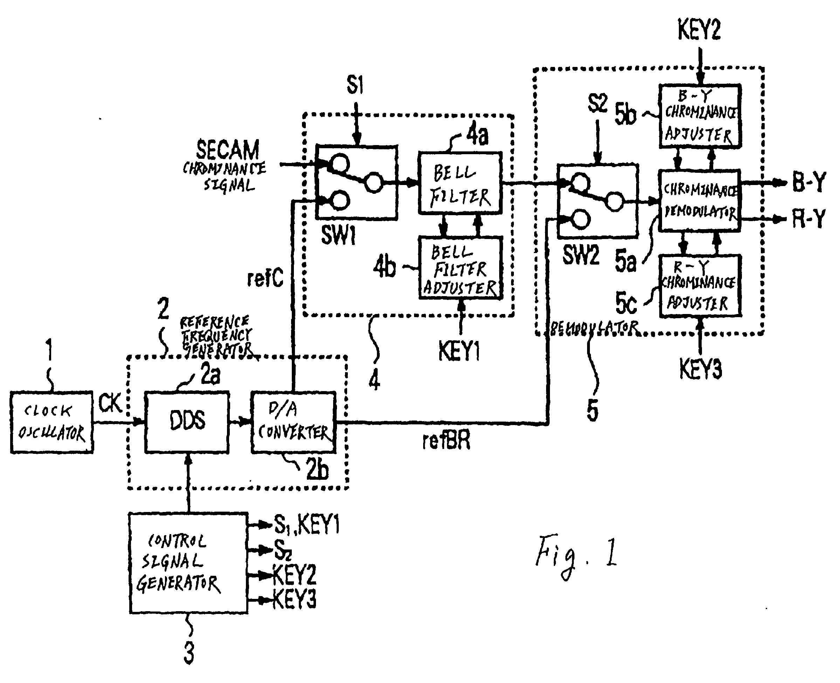

The present invention will be described in detail with reference to the FIGURES 1 to 7.

FIGURE 1 is a block diagram for explaining a first embodiment of the present invention. In FIGURE 1, a clock signal CK generated from a reference oscillator 1 is applied to a reference signal generator 2. The reference frequency generator 2, for generating different reference frequency signals, has a DDS circuit 2a for accumulating clock signals generated in the reference oscillator 1, of which the overflow cycle of the accumulation is changeable under the control of the control signal applied thereto in the time-sharing manner, and a D/A converter 2b for converting the accumulated data from the DDS circuit into an analog signal. The overflow cycle of the DDS 2a, i.e., the reference frequency signal refC generated from reference frequency generator 2 is controlled by a control signal supplied from a control signal generator 3. From the reference frequency signal refC is converted to an analog signal in a D/A converter 2b, and then the reference frequency signal refC at the analog mode is applied to a bell filter adjuster 4. The control signal generator 3 also generates a variety of control signals signals S1, S2, KEY1 through KEY3 other then the control signal for controlling the frequency of the reference signal generator 2.

The bell filter adjuster 4 is comprised of a switch SW1, a bell filter 4a and a bell filter adjuster 4b. The switch SW1 selects either the SECAM system chrominance signal or the reference frequency signal refC under the control of the control signal S1. The signal selected by the switch SW1 is applied to the bell filter 4a. Then a response of the bell filter 4a to the reference frequency signal refC is detected in the bell filter adjuster 4b and fed back to the bell filter 4a, so as to adjust the central frequency fC of the bell filter 4a in equal to the reference frequency signal refC. The bell filter adjuster 4b operates in synchronism with the operation of the switch SW1 under the control of the control signal KEY1.

The signal having passed through the bell filter 4a is applied to a demodulator 5. The demodulator 5 is comprised of the switch SW2, the chrominance demodulator 5a, the B-Y chrominance adjuster 5b, and the R-Y chrominance adjuster 5c. The demodulator 5 receives to properly adjust a reference frequency signal refBR from the D/A converter 2b. Here the reference frequency signal refBR represents an AC signal changeable between a B-Y subcarrier fB and an R-Y subcarrier fR in the time-sharing manner. The switch SW2 selects either the output signal of the bell filter 4a and the reference frequency signal refBR under the control of the control signal S2. The reference frequency signal refBR selected in the switch SW2 is applied to the chrominance demodulator 5a, then the demodulated signal voltage of the subcarrier fB of the reference frequency signal refBR is adjusted in the B.Y chrominance adjuster 5b. The demodulated signal voltage is fed back to the chrominance demodulator 5a and then adjusted in equal to a predetermined voltage. As a result, the black level of the B-Y chrominance signal is well-adjusted. Similarly in the adjustment of the R-Y chrominance signal, a demodulated signal voltage of the subcarrier fR of the reference frequency signal refBR from the chrominance demodulator 5a is adjusted in the chrominance demodulator 5c and then fed back to the chrominance demodulator 5a. As a result, the black level of the R-Y chrominance signal is also well-adjusted. The B-Y and R-Y chrominance adjusters 5b and 5c, respectively operate under the controls of the control signals KEY2 and KEY3.

Referring now to the timing chart of FIGURE 2, the black level adjusting operations of the embodiment as shown in FIGURE 1 will be described as to a case that the adjustment is carried out in the vertical retrace interval. In this case, the switch SW1 and the bell filter adjuster 4b operate under the controls of the same control signals which are active in a partial period of the vertical retrace interval V-BLK. The control signal S1 makes the switch SW1 to pass therethrough the reference frequency signal refC from the D/A converter 2b in their H-level period. The reference frequency signal refC is then applied to the bell filter 4a. When the bell filter 4a has been adjusted, a control signal S2 becomes active and makes the switch SW2 to pass therethrough a reference frequency signal refBR which carries thereon the subcarriers fB and fR from the D/A converter 2b. The reference frequency signal refBR is then applied to the chrominance demodulator 5a. The subcarrier fB is used for adjusting the demodulation of the B-Y chrominance signal under the control of the control signal KEY2, while the subcarrier fR is used for adjusting the demodulation of the R-Y chrominance signal under the control of the control signal KEY3.

Now, the DDS 2a will be explained hereinafter. The DDS 2a is a digital circuit for accumulating a certain data AS in every occurrence of clock signal CK. Thus the accumulated data increases step by step. When it reaches a predetermined threshold level, an overflow has occurred and the accumulated data jumps down to zero level. Then newly accumulated data again increases step by step. This overflow cycle fS will be given by the following equation. Here, "fCK" denotes the frequency of the clock signal CK, and "n" denotes the bit length of the accumulation.

$$FS = fCK \times \Delta S/2n$$

Accordingly, an arbitrary frequency of reference signal can be obtained by changing either or both of the "n" and "ΔS". Here it is understood that it is unable to simultaneously generate a plurality of reference frequency signals from the DDS 2a.

Here it is assumed that an accuracy of the reference frequency signal required for adjusting the SECM chrominance demodulator is the order of ±1KHz, and the fCK = 16.2MHz. Then, the bit length "n" of the accumulation must be "13" or more. Foe example, when "n" = 13 and "ΔS" = 2149, the overflow cycle of the reference frequency assigned to the B-Y chrominance signal becomes 4.24973 MHz. According to a similar calculation, the overflow cycle of the reference frequency assigned to the R-Y chrominance signal becomes 4.40596 MHz, when "n" = 13 and "ΔS" = 2228. Here for enhancing the accuracy, it is made by only increasing the bit length "n" of the accumulation. Since the frequency of the SSD2a is changed by altering the data such as "n" and "ΔS", there is no needs of using a particular circuit. Accordingly the frequency change can be easily carried out. The reference frequency signals obtained as described above can be supplied to any other circuits as well as the SECAM chrominance demodulator.

As seen from FIGURE 2, the reference frequency signal refC is output for only limited periods as required. This is made in consideration to prevent a crosstalk of the reference frequency signal refC signal to other circuits through the switch SW1 when a chrominance signal presents any period other than the vertical retrace interval V-BLK. However, if there is no such concerns the reference frequency signal refC can be always output. Although the reference frequency signals refC and refBR are shown to be output through different lines from the D/A converter 2b, they are able to be output through the same output line of the reference frequency signal refC.

Now another embodiment of the present invention will be described, which having a configuration more simplified from that as shown in FIGURE 1. This is made in consideration of that in FIGURE 1 the chrominance demodulator 5a is configured by a PLL demodulator having its demodulation axis center at the subcarrier signal fB when the SECAM system B-Y chrominance signal is received, while having its demodulation axis center at the subcarrier signal fR when the SECAM system R-Y chrominance signal is received.

Since the demodulator 5 is comprised of single demodulation unit, when the modulator is adjusted in relation to one of the subcarriers, e.g., the subcarrier fB, the adjustment result of the demodulator in relation to the other subcarrier fR can be determined from the former adjustment result, due to the fact that the relationship between the subcarriers fB and fR is known. For instance the adjustment in relation to the subcarrier fR can be determined by only shifting the adjustment result in relation to the subcarrier fB at a predetermined ratio in D/A converters. Accordingly in this case, capacitors for holding voltages can be reduced their capacities by configuring the R-Y chrominance adjuster 5c with a D/A converter. Thus, the circuit scale can be reduced.

That is, the adjustment of the chrominance demodulator can be carried out by only one reference frequency signal, thus not requiring two reference frequency signals. The single signal may be either of the subcarriers fB and fR, or a frequency of 4.328MHz which is the intermediate of the subcarriers fB and fR. In this case, since there are no factors of limiting the reference frequency, the selection of the reference frequency has a high degree of flexibility.

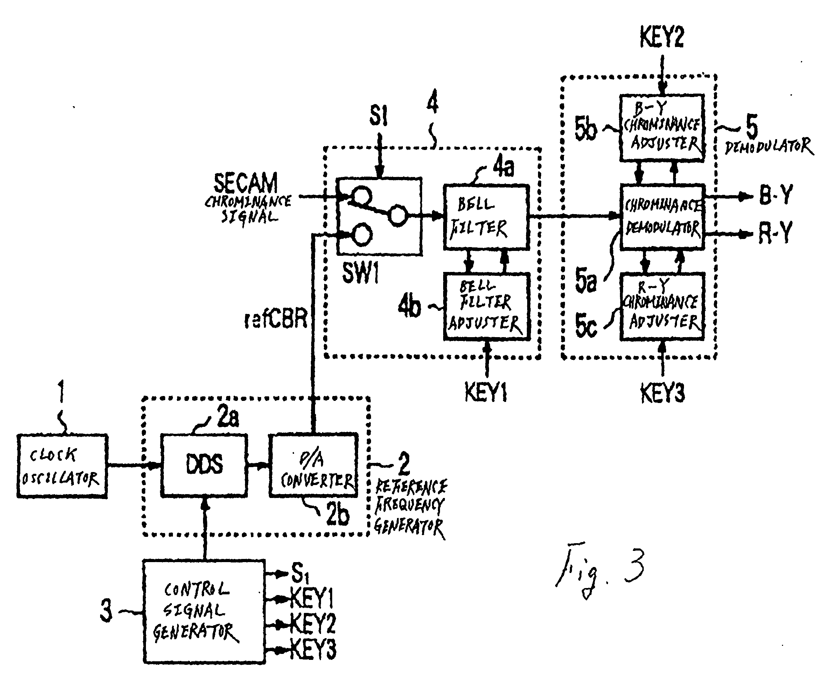

Referring now to FIGURE 3, the second embodiment of the present invention as suggested above will be concretely explained hereinafter. In FIGURE 3, the same elements as those as shown in FIGURE 1 are assigned the same references. In this embodiment the switch SW2 as shown in FIGURE 1 is eliminated, while the reference frequency signals refC and refBR output from the reference signal generator 2 are supplied to the switch SW1 through a common line. The output data from the DDS 2a contains undesired frequency components so-called as aliasing noises. The output data of the DDS 2a is suppressed the undesired frequency components by the bell filter 4a, and then transferred to the chrominance demodulator 5a.

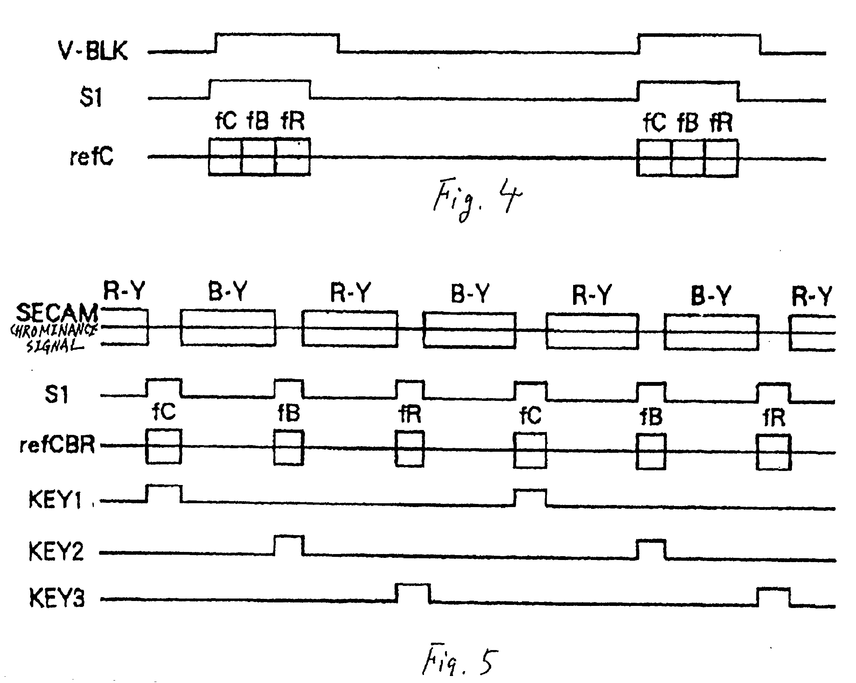

In the embodiment as shown in FIGURE 3, the reference frequency signals refC, refB and refR generated in the time-sharing manner are all output through the common line, as seen from the timing chart of FIGURE 4. The control signal S1 has a pulse width capable of covering the selection of all the reference signals refC, refB and refR. According to the configuration as described above, the subcarriers fB and fR are applied to the chrominance demodulator 5a after the undesired frequency components have been suppressed in the bell filter 4a. Thus there is no need of equipping additional filters.

In the reference signal generator 2 including the DDS 2a as shown in FIGURES 1 and 3, the reference frequency signals are generated in the time-sharing manner. Thus the adjustments required for demodulating the SECAM chrominance signals are all carried out by properly setting the periods in the time-sharing manner.

In the embodiments as described above, all the adjustments are carried out in the vertical retrace interval. Although the bell filter adjuster 4, and the B-Y and R-Y chrominance adjusters 5b and 5c, have a merit of employing the DDS 2a in either of the analog detection configuration and the digital detection configuration, especially in the case of the analog detection configuration the adjusted signal becomes to be stored in capacitors. In a bipolar configuration, an amount of adjusting offset in case that the adjustment has been carried out in the vertical scanning cycle becomes large. Thus there arises a strong probability of that a large capacity of capacitors are needed to be installed outside ICs.

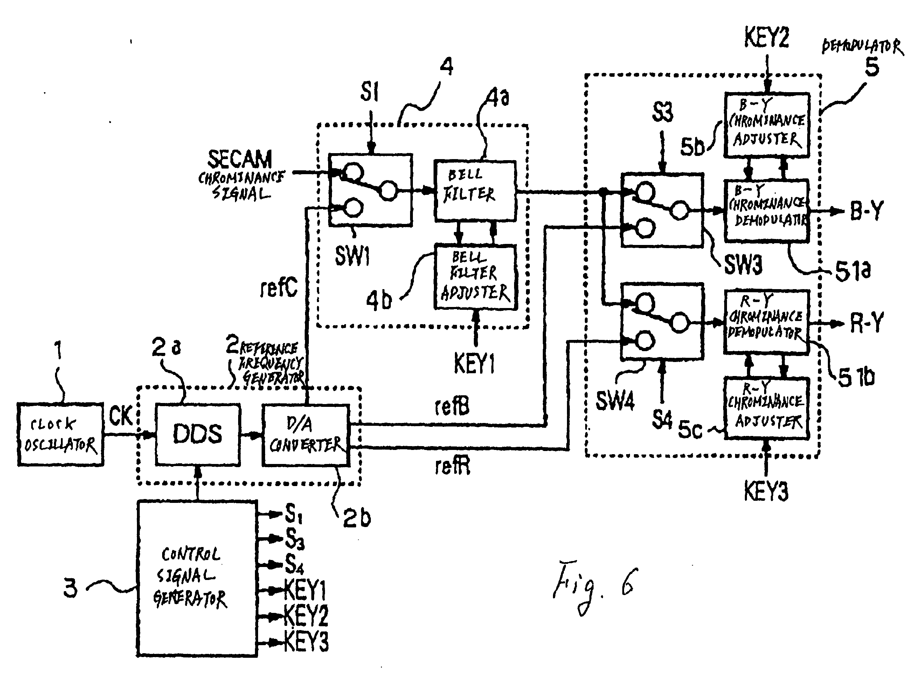

For avoiding the possibility, it is desirable to carry out the adjustments diligently at the cycle of horizontal scanning period. Then such a case will be described in reference to FIGURES 3 and 5.

FIGURE 5 shows the SECAM system chrominance signals in every horizontal scanning period, and wherein the silence periods exist in the horizontal retrace intervals. The reference frequency signals are inserted one by one in the periods in which no chrominance signals exist, i.e., around horizontal synchronization signal. One of the subcarrier signals fC, fB and fR is selected in every horizontal scanning period under the control of the control signal S1. Then subcarrier signals fC, fB and fR are repetitively inserted one by one into respective horizontal scanning periods in every cycle of three successive horizontal scanning periods. By switching the adjusters corresponding to the subcarrier signals fC, fB and fR under the controls of the control signals KEY1 to KEY 3, the data holding period required for the automatic adjustment can be reduced into the length of three hoirizontal scanning periods. In the interests of simplicity, the adjusting operation in the horizontal scanning periods has been described in reference to the configuration of FIGURE 3. However, it is also possible in the configuration of FIGURE 1.

Also in the above descriptions the chrominance demodulator 5a is shared with both the B.Y and R-Y chrominance adjusters 5b and 5c, and thus its demodulation axis is switched between chrominance demodulation axis and the R-Y chrominance axis. However, the data holding periods can be reduced further by equipping respective dedicated chrominance demodulators.

Referring now to FIGURE 6, a third embodiment of the present invention directed to the configuration using such dedicated chrominance demodulators will be described. This third embodiment differs from the first embodiment as shown in FIGURE 1 by the manner of signal outputting from the D/A converter 2b and the configuration of the demodulator 5.

That is, the output signal from the bell filter 4a is applied to both the switches SW3 and SW4 at their one inputs. The switch SW3 is controlled by the control signal S3, while the switch SW4 is controlled by the control signal S4. The other inputs of the switches SW3 and SW4 receive the reference frequency signals refB and refR both supplied from the D/A converter 2b. The reference frequency signal refB is supplied through its dedicated line and carries only the subcarrier fB. Also the reference frequency signal refR is supplied through its dedicated line and carries only the subcarrier fR. The signal selected in the switch SW3 is applied to the B.Y chrominance demodulator 51a. Then the demodulated signal is applied to the BY chrominance adjuster 5b and adjusted its level therein. The adjusted signal is fed back to the demodulator 51a for the automatic adjustment. The signal selected in the switch SW4 is applied to the R-Y chrominance demodulator 51b. Then the demodulated signal is applied to the R-Y chrominance adjuster 5c and adjusted its level therein. The adjusted signal is also fed back to the demodulator 51b for the automatic adjustment. The B-Y chrominance adjuster 5b is controlled by the control signal KEY2, while the R-Y chrominance adjuster 5c is controlled by the control signal KEY 3.

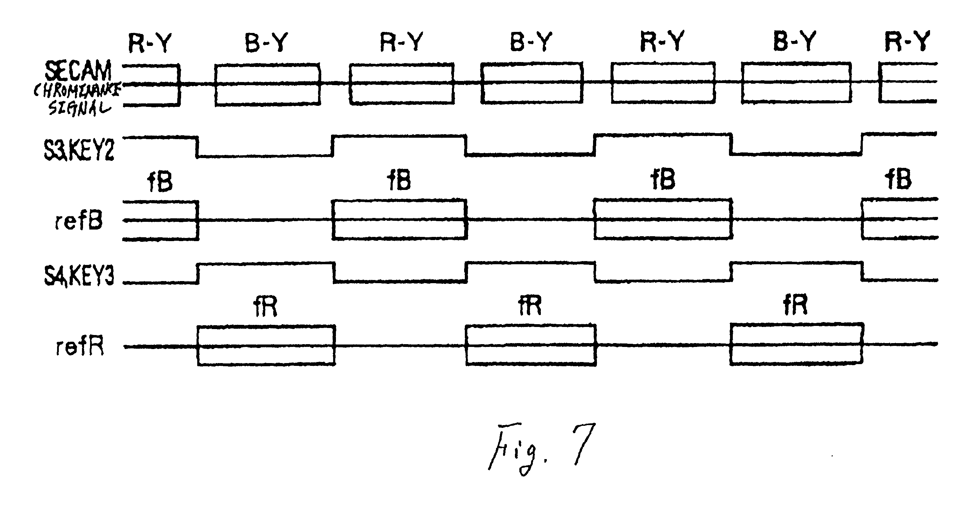

Referring now to FIGURE 7, the operation of the embodiment of the FIGURE 6 will be described. Although the control signal S1 is not shown in FIGURE 7, it is assumed that the control signal S1 is the same as the control signal Si in the first embodiment. That is, the control signal S1 has H-level periods in the vertical retrace interval V-BLK (see FIGURE 2). The control signals S3 and KEY2 go to the H-level in the period in which the R-Y chrominance signal exists, and then make the switch SW3 to select either the subcarrier fB on the reference frequency signal refB and the chrominance signal. The signal selected in the switch SW3 is demodulated in the demodulator 5. That is, when the B-Y chrominance signal through the B-Y chrominance signal line has been selected, the subcarrier fB is demodulated in the B-Y chrominance demodulator 51a and then its demodulation signal is adjusted its level in the B-Y chrominance signal adjuster bb. If the level of the adjusted signal, i.e., its black level would be deviated from a reference level, the black level will be automatically adjusted into the reference level by the repetitive feedback operation between the B-Y chrominance signal adjuster 5b and the B-Y chrominance demodulator 51a. The control signals S4 and KEY3 go to the H-level in the period in which the B-Y chrominance signal exists, and then make the switch SW4 to select either the subcarrier fR on the reference frequency signal refR and the chrominance signal. The signal selected in the switch SW4 is demodulated in the demodulator 5. That is, when the R-Y chrominance signal through the R-Y chrominance signal line has been selected, the subcarrier fR is demodulated in the R-Y chrominance demodulator 51b and then its demodulation signal is adjusted its level in the R-Y chrominance signal adjuster 5c. If the level of the adjusted signal, i.e., its black level would be deviated from a reference level, the black level will be automatically adjusted into the reference level by the repetitive feedback operation between the B-Y chrominance signal adjuster 5c and the R-Y chrominance demodulator 51b.

According to the third embodiment as described above, the B-Y and R-Y chrominance adjusters 5b and 5c operate within the horizontal scanning interval. Thus the data holding period is reduced to the period of the horizontal scanning interval. This is highly advantageous to stabilize the SECAM chrominance signal demodulation.

Further, in the adjustment at the horizontal scanning interval, the control signal S1 can be configured in similar to that as shown in FIGURE 5 by reducing the active periods of the subcarriers fB and fR by the horizontal retrace interval. While in this case the horizontal retrace interval can be utilized for adjusting the bell filter. In this case, although the data holding period for the adjustments of the respective chrominance signals is increased by the horizontal retrace interval, it still falls within the horizontal scanning interval. Thus the level offset can be sufficiently suppressed.

As described above, by using the reference frequency generator according to the present invention, the reference frequencies suitable for adjusting SECAM chrominance signals can be directly generated. Thus any fixed voltage sources are not required, and the adjustment errors of the black levels can be sufficiently reduced. The factors of causing the level offset of the black level are limited to only the adjusting offsets and the compatibility among circuit devices. However these factors can be improved by any manner. Actually, the level offset can be suppressed to about 1 or 2 mV. Thus the SECAM system chrominance demodulator can be perfectly adjusted automatically.

Here, although not shown in FIGURE 1, a television standard discriminator has been generally provided in the SECAM system chrominance demodulators. Such a television standard discriminator discriminates the standards of the current received television signal by checking outputs from chrominance demodulators and/or bell filters. Thus if the chrominance demodulators and/or the bell filters were well adjusted, the television standard discriminator is not required of further adjustment thereto. Then such a television standard discriminator is eliminated its illustration from FIGURES 1, 3 and 6. However, if such a discrimination of the television standard will be carried out by using any circuit other than those as described above, the television standard discriminator should be also adjusted. In this case, as the DDS can generate any arbitrary frequency the DDS can provide a frequency of 4.328 MHz which is intermediate of the two subcarriers for adjusting the television standard discriminator.

Although not shown in FIGURES 1, 3, and 6, the chrominance demodulators are able to include limiter amplifiers therein. Such a limiter amplifier can be separated from the chrominance demodulators and then located between the bell filter 4a and the switches SW2 to SW4. In this case the limiter amplifier is also able to have a switch function. Then the switches can be eliminated.

As described above, in the SECAM system chrominance demodulator according to the present invention, a reference signal generator of high accuracy can be realized by using the DDS. Then it is able to highly enhance the adjusting accuracy of the SECAM system chrominance demodulator. As the reference signal generator is able to generate a plurality of reference signals in the time-sharing manner, the bell filter and/or the television standard discriminator as well as the chrominance demodulator can be adjusted together.

As described above, the present invention can provide an extremely preferable SECAM system chrominance signal demodulator.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

## Claims

1. A SECAM system chrominance signal demodulator, comprising :

    a reference oscillator (1) for generating a clock signal;
    a control signal generator (3) for generating a plurality of control signals in a time-sharing manner, by receiving a synchronizing signal of video signal;
    a reference frequency generator (2) for generating different reference frequency signals in time-sharing manner, which is comprised of a DDS circuit (2a) for accumulating clock signals generated in the reference oscillator, of which the overflow cycle of the accumulation is changeable under the control of a control signal applied thereto in the time-sharing manner, and a D/A converter (2b) for converting the accumulated data from the DDS circuit into an analog reference frequency signal;
    an adjusting-sublect (4,5) comprising an adjustable bell filter (4a) for inversely bell-filtering the SECAM system chrominance signal and an adjustable chrominance demodulator (5a) for demodulating a chrominance signal from an output of the bell filter, and comprising a frequency adjuster (4b, 5b, 5c) for adjusting the central frequency of the bell filter and for adjusting the chrominance demodulator when applying the output signal from the D/A converter to the adjusting-subject.

2. A SECAM system chrominance signal demodulator as claimed in claim 1, **characterized by** that it is configured to adjust the bell filter by a first reference frequency signal (refC), and to adjust the chrominance demodulator by a second reference frequency signal (refBR), respectively generated in the reference frequency generator.

3. A SECAM system chrominance signal demodulator as claimed in claim 1, **characterized by** that it is configured to adjust the bell filter by a first reference frequency signal (refC), and to adjust the chrominance demodulator by a second and a third reference frequency signals (refB, refR), respectively generated in the reference frequency generator.

4. A SECAM system chrominance signal demodulator as claimed in claim 1, **characterized by** that it is configured to halt the reference frequency generator for a period other than the period in that the frequency adjuster is operating.

5. A SECAM system chrominance signal demodulator as claimed in claim 1, **characterized by** that the chrominance demodulator is comprised of a B-Y demodulator and a R-Y demodulator, and that it is configured to adjust the bell filter by a first reference frequency signal (refC), and to adjust the B-Y demodulator by a second reference frequency signal (refB) and to adjust the R-Y demodulator by a third reference frequency signal (refR), respectively generated from the reference frequency generator.

6. A SECAM system chrominance signal demodulator as claimed in any one of claims 1 to 5, **characterized by** that it is configured that the frequency adjustments based on the reference frequency signals generated in the reference frequency generator are all carried out in a vertical retrace interval.

7. A SECAM system chrominance signal demodulator as claimed in any one of claims 3 to 5, **characterized by** that the frequency adjustments based on first through third reference frequency signals generated in the reference frequency generator are sequentially carried out in different horizontal retrace intervals.

8. A SECAM system chrominance signal demodulator as claimed in claim 5, **characterized by** that it is configured that the frequency adjustment based on the first reference frequency signal is carried out in a vertical retrace interval, while the frequency adjustments based on the second and the third reference frequency signals are carried out in horizontal scanning intervals unassigned for chrominance demodulations.

9. A SECAM system chrominance signal demodulator as claimed in claim 5, **characterized by** that it is configured that the frequency adjustment based on the first reference frequency signal is carried out in a horizontal retrace interval, while the frequency adjustments based on the second and the third reference frequency signals are carried out in horizontal scanning intervals unassigned for chrominance demodulations.

10. A SECAM system chrominance signal demodulator as claimed in claim 5, **characterized by** that it is configured that the frequency adjustment based on the first reference frequency signal is carried out in a vertical retrace interval, while the frequency adjustments based on the second and the third reference frequency signals are carried out in periods of horizontal scanning intervals other than horizontal retrace intervals.


**Patentansprüche**

1. SECAM-Chrominanzsignal-Demodulator, umfassend:

einen Referenzoszillator (1), der ein Taktsignal erzeugt;
einen Steuersignalgenerator (3), der mehrere Steuersignale im Time-Sharing-Betrieb erzeugt, indem er ein Synchronisiersignal des Videosignals empfängt;
einen Referenzfrequenzgenerator (2), der unterschiedliche Referenzfrequenzsignale im Time-Sharing-Betrieb erzeugt und aus einer DDS-Schaltung (2a) besteht, die im Referenzoszillator erzeugte Taktsignale akkumuliert, und deren Überlaufzyklus der Akkumulation gesteuert durch ein Steuersignal verändert werden kann, das im Time-Sharing-Betrieb daran angelegt wird, und aus einem D/A-Umsetzer (2b), der die akkumulierten Daten aus der DDS-Schaltung in ein analoges Referenzfrequenzsignal umsetzt;
eine Einstellvorrichtung (4, 5), umfassend ein einstellbares Glockenkurvenfilter (4a) für die inverse Glockenkurvenfilterung des SECAM-Chrominanzsignals, und einen einstellbaren Chrominanzdemodulätor (5a) zum Demodulieren eines Chrominanzssignals im Ausgangssignal des Glockenkurvenfilters, und zudem umfassend einen Frequenzeinsteller (4b, 5b, 5c) zum Einstellen der Mittenfrequenz des Glockenkurvenfilters und zum Einstellen des Chrominanzdemodulators, wenn das Ausgangssignal des DIA-Umsetzers an die Einstellvorrichtung angelegt wird.

2. SECAM-Chrominanzsignal-Demodulator nach Anspruch 1, **dadurch gekennzeichnet, dass** er so konfiguriert ist, dass das Glockenkurvenfilter mit einem ersten Referenzfrequenzsignal (refC) eingestellt wird und dass der Chrominanzdemodulator mit einem zweiten Referenzfrequenzsignal (refBR) eingestellt wird, die jeweils im Referenzfrequenzgenerator erzeugt werden.

3. SECAM-Chrominanzsignal-Demodulator nach Anspruch 1, **dadurch gekennzeichnet, dass** er so konfiguriert ist, dass das Glockenkurvenfilter mit einem ersten Referenzfrequenzsignal (refC) eingestellt wird und dass der Chrominanzdemodulator mit einem zweiten und einem dritten Referenzfrequenzsignal (refB, refR) eingestellt wird, die jeweils im Referenzfrequenzgenerator erzeugt werden.

4. SECAM-Chrominanzsignal-Demodulator nach Anspruch 1, **dadurch gekennzeichnet, dass** er so konfiguriert ist, dass er den Referenzfrequenzgenerator für eine Periode anhält, die nicht die Periode ist, in der der Frequenzeinsteller arbeitet.

5. SECAM-Chrominanzsignal-Demodulator nach Anspruch 1, **dadurch gekennzeichnet, dass** der Chrominanzdemodulator einen B-Y-Demodulator und einen R-Y-Demodulator umfasst, und dass er so konfiguriert ist, dass er das Glockenkurvenfilter mit einem Referenzfrequenzsignal (refC) einstellt und dass er den B-Y-Demodulator mit einem zweiten Referenzfrequenzsignal (refB) einstellt und dass er den R-Y-Demodulator mit einem dritten Referenzfrequenzsignal (refR) einstellt, die jeweils im Referenzfrequenzgenerator erzeugt werden.

6. SECAM-Chrominanzsignal-Demodulator nach irgendeinem der Ansprüche 1 - 5, **dadurch gekennzeichnet, dass** er so konfiguriert ist, dass die Frequenzeinstellungen, die auf den Referenzfrequenzsignalen beruhen, die im Referenzfrequenzgenerator erzeugt werden, alle in einem Bildrücklaufintervall erfolgen.

7. SECAM-Chrominanzsignal-Demodulator nach irgendeinem der Ansprüche 3 - 5, **dadurch gekennzeichnet, dass** die Frequenzeinstellungen, die auf dem ersten bis dritten Referenzfrequenzsignal beruhen, die im Referenzfrequenzgenerator erzeugt werden, nacheinander in unterschiedlichen Zeilenrücklaufintervallen erfolgen.

8. SECAM-Chrominanzsignal-Demodulator nach Anspruch 5, **dadurch gekennzeichnet, dass** er so konfiguriert ist, dass die Frequenzeinstellung, die auf dem ersten Referenzfrequenzsignal beruht, in einem Bildrücklaufintervall erfolgt, wogegen die Frequenzeinstellungen, die auf dem zweiten und dritten Referenzfrequenzsignal beruhen, in Zeilenabtastintervallen erfolgen, denen keine Chrominanzdemodulationen zugewiesen sind.

9. SECAM-Chrominanzsignal-Demodulator nach Anspruch 5, **dadurch gekennzeichnet, dass** er so konfiguriert ist, dass die Frequenzeinstellung, die auf dem ersten Referenzfrequenzsignal beruht, in einem Zeilenrücklaufintervall erfolgt, wogegen die Frequenzeinstellungen, die auf dem zweiten und dritten Referenzfrequenzsignal beruhen, in Zeilenabtastintervallen erfolgen, denen keine Chrominanzdemodulationen zugewiesen sind.

10. SECAM-Chrominanzsignal-Demodulator nach Anspruch 5, **dadurch gekennzeichnet, dass** er so konfiguriert ist, dass die Frequenzeinstellung, die auf dem ersten Referenzfrequenzsignal beruht, in einem Bildrücklaufintervall erfolgt, wogegen die Frequenzeinstellungen, die auf dem zweiten und dritten Referenzfrequenzsignal beruhen, in Perioden von Zeilenabtastintervallen erfolgen, die keine Zeilenrücklaufintervalle sind.

## Revendications

1. Un démodulateur pour signal de chrominance du système SECAM, comprenant :

> un oscillateur de référence (1) pour produire un signal d'horloge ;
> un générateur de signaux de commande (3) pour produire une pluralité de signaux de commande en temps partagé, par réception d'un signal de synchronisation de signal vidéo ;
> un générateur de fréquence de référence (2) pour produire différents signaux de fréquence de référence en temps partagé, lequel est composé d'un circuit DDS (2a) pour accumuler des signaux d'horloge produits dans l'oscillateur de référence, dont le cycle de dépassement d'accumulation peut être modifié sous la commande d'un signal de commande qui lui est appliqué en tant partagé, et un convertisseur N/A (2b) pour convertir les données accumulées issues du circuit DDS en un signal de fréquence de référence analogique ;
> un objet de réglage (4, 5) comprenant un filtre en cloche réglable (4a) pour filtrer en cloche de manière inverse le signal de chrominance du système SECAM et un démodulateur de chrominance réglable (50) pour démoduler un signal de chrominance issu d'une sortie du filtre en cloche, et comprenant un organe de réglage de fréquence (4b, 5b, 5c) pour régler la fréquence centrale du filtre en cloche et pour régler le démodulateur de chrominance lors de l'application du signal de sortie du convertisseur N/A à l'objet de réglage.

2. Un démodulateur pour signal de chrominance du système SECAM tel que revendiqué à la revendication 1, **caractérisé en ce qu'**il est configuré pour régler le filtre en cloche à l'aide d'un premier signal de fréquence de référence (refC) et pour régler le démodulateur de chrominance à l'aide d'un second signal de fréquence de référence (reBR), respectivement produits dans le générateur de fréquence de référence.

3. Un démodulateur pour signal de chrominance du système SECAM tel que revendiqué à la revendication 1, **caractérisé en ce qu'**il est configuré pour régler le filtre en cloche à l'aide d'un premier signal de fréquence de référence (revC) et pour régler le démodulateur de chrominance à l'aide d'un second et d'un troisième signal de fréquence de référence (revB, revR), respectivement produits dans le générateur de fréquence de référence.

4. Un démodulateur pour signal de chrominance du système SECAM tel que revendiqué à la revendication 1, **caractérisé en ce qu'**il est configuré pour arrêter le générateur de fréquence de référence pendant une période autre que la période dans laquelle l'organe de réglage de fréquence est en fonctionnement.

5. Un démodulateur pour signal de chrominance du système SECAM tel que revendiqué à la revendication 1, **caractérisé en ce que** le démodulateur de chrominance est composé d'un démodulateur B-Y et d'un démodulateur R-Y, et **en ce qu'**il est configuré pour régler le filtre en cloche à l'aide d'un premier signal de fréquence de référence (revC), pour régler le démodulateur B-Y à l'aide d'un second signal de fréquence de référence (revB), et pour régler le démodulateur R-Y à l'aide d'un troisième signal de fréquence de référence (revR), respectivement produits à partir du générateur de fréquence de référence.

6. Un démodulateur pour signal de chrominance du système SECAM tel que revendiqué dans l'une quelconque des revendications 1 à 5, **caractérisé en ce qu'**il est configuré en ce que les réglages de fréquence basés sur les signaux de fréquence de référence produits dans le générateur de fréquence de référence sont tous exécutés dans un intervalle de suppression verticale.

**7.** Un démodulateur pour signal de chrominance du circuit SECAM tel que revendiqué dans l'une quelconque des revendications 3 à 5, **caractérisé par le fait que** les réglages de fréquence basés sur les premier à troisième signaux de fréquence de référence produits dans le générateur de fréquence de référence sont exécutés séquentiellement dans différents intervalles d'effacement horizontal.

**8.** Un démodulateur pour signal de chrominance du système SECAM tel que revendiqué à la revendication 5, **caractérisé en ce qu'**il est configuré **en ce que** le réglage de fréquence basé sur le premier signal de fréquence de référence est exécuté dans un intervalle de suppression verticale, alors que les réglages de fréquence basés sur les second et troisième signaux de fréquence de référence sont exécutés dans des intervalles de balayage horizontal non attribués pour démodulation de chrominance.

**9.** Un démodulateur pour signal de chrominance du système SECAM tel que revendiqué à la revendication 5, **caractérisé en ce qu'**il est configuré **en ce que** le réglage de fréquence basé sur le premier signal de fréquence de référence est exécuté dans un intervalle de suppression horizontale, alors que les réglages de fréquence basés sur les second et troisième signaux de fréquence de référence sont exécutés dans des intervalles de balayage horizontal non attribués pour démodulation de chrominance.

**10.** Un démodulateur pour signal de chrominance du système SECAM tel que revendiqué à la revendication 5, **caractérisé en ce qu'**il est configuré **en ce que** le réglage de fréquence basé sur le premier signal de fréquence de référence est exécuté dans un intervalle de suppression verticale, alors que les réglages de fréquence basés sur les second et troisième signaux de fréquence de référence sont exécutés dans des périodes d'intervalles de balayage horizontal autres que les intervalles de suppression horizontale.

Fig. 1

Fig. 2

EP 0 932 311 B1

Fig. 3

EP 0 932 311 B1

V-BLK

S1

fC fB fR

refC

Fig. 4

SECAM
CHROMINANCE
SIGNAL

R-Y     B-Y     R-Y     B-Y     R-Y     B-Y     R-Y

S1

fC          fB          fR          fC          fB          fR

refCBR

KEY1

KEY2

KEY3

Fig. 5

Fig. 6

EP 0 932 311 B1

Fig. 7

EP 0 932 311 B1

Fig. 8